Europäisches Patentamt

European Patent Office

Office européen des brevets

(11) Publication number: **0 281 397 B1**

(12) EUROPEAN PATENT SPECIFICATION

(45) Date of publication of patent specification: **29.07.92**   (51) Int. Cl.⁵: **F16C 11/04**, B60S 1/34,
                                                                    B60S 1/38

(21) Application number: **88301861.6**

(22) Date of filing: **03.03.88**

(54) **Pivot joint.**

(30) Priority: **04.03.87 GB 8705033**

(43) Date of publication of application:
    **07.09.88 Bulletin 88/36**

(45) Publication of the grant of the patent:
    **29.07.92 Bulletin 92/31**

(84) Designated Contracting States:
    **BE DE ES FR IT**

(56) References cited:
    **BE-A- 716 782**
    **DE-A- 2 550 544**
    **FR-A- 2 415 563**
    **FR-A- 2 491 847**
    **GB-A- 2 021 936**

(73) Proprietor: **TRICO FOLBERTH LIMITED**
    **Great West Road**
    **Brentford, Middlesex TW8 9HP(GB)**

(72) Inventor: **Duck, Ivan Alfred**
    **"Chenies" Loudhams Wood Lane**
    **Chalfont St. Giles Buckingshamshire(GB)**
    Inventor: **Pethers, Peter Cecil**
    **Villa Rosa Lovel Road**
    **Winkfield Berkshire(GB)**

(74) Representative: **Pedder, James Cuthbert**
    **J.C. Pedder & Co. 38 Norbury Cross**
    **Norbury London SW16 4JO(GB)**

## Description

This invention relates to a pivot joint which is particularly but not exclusively useful in the manufacture of windscreen wipers.

In the manufacture of windscreen wipers, a number of pivot joints are used, particularly between the various yokes and/or levers of the windscreen wiper blade.

Problems exist in the manufacture of windscreen wipers due to the necessity, very often, of pivoting metal parts together. These joins tend to be noisy and have a tendency to suffer from wear and corrosion. Various proposals have been made for overcoming these problems, for example, by the provision of plastics members between the metal parts of the joint, but these have not proved entirely satisfactory from a manufacturing standpoint although they have worked satisfactorily in use.

One such proposal is made in French Patent Specification FR-A-2 415 563 which discloses a joint body of generally channel section adapted to sit within the first member and to receive the second member therewithin, the joint body having a pair of outwardly extending trunnions adapted to cooperate with apertures in the first member, aligned bores through the trunnions adapted to be aligned with aligned apertures in the second member and a pin adapted to extend through the apertures of the members and through the bores of the trunnions of the joint body.

However, the problem arises that the pin is in the form of a double headed rivet and it is necessary to rivet the joint after it has been assembled, requiring an extra operation after assembly and possible damage to the windscreen wiper blade.

The present invention seeks to provide a new and improved pivot joint which is relatively inexpensive to manufacture and use and which overcomes or reduces some or all of the above problems.

According to the invention, there is provided a pivot joint for pivoting together first and second members at least the first member of which is of channel section at the joint and the second member of which is adapted to seat within the first member, comprising a joint body of generally channel section adapted to sit within the first member and to receive the second member therewithin, the joint body having a pair of outwardly extending trunnions adapted to cooperate with apertures in the first member, aligned bores through the trunnions adapted to be aligned with aligned apertures in the second member and a pin adapted to extend through the apertures of the members and through the bores of the trunnions of the joint body, in which pin is retained in one of the bores of the joint body by means of one or more projections or recesses on the pin cooperating with a respective recess or recesses or a projection or projections in the bore of the joint body.

Preferably, a single projection is provided in the form of an annular rib and the cooperating recess is an annular groove.

The pin may be formed with the projection or projections and the bore may be provided with the groove or grooves.

Suitably,the members may be yokes of a windscreen wiper blade harness. The first member may be the primary yoke and the second member may be the secondary yoke.

The invention will now be described in greater detail, by way of example, with reference to the drawings, in which:-

Figure 1 is a perspective view of one form of pivot joint in accordance with the invention as applied to the joint between primary and secondary yokes of a windscreen wiper blade harness;

Figure 2 is a perspective view of the joint body shown in figure 1;

Figure 3 is a sectional view of the joint taken on the line III-III of figure 1;

Figure 4 is a side view of the pin used in the pivot joint of figures 1 to 3;

Figure 5 is a view similar to figure 4 but showing a different form of pin;

Figure 6 is a view similar to figure 3 but showing a form of the joint in which the pin is provided with an annular groove;

Figure 7 is a view similar to figure 4 but showing the pin used in the joint shown in figure 6, and

Figure 8 is a view similar to figure 3 but showing a form of joint in which the pin is of stepped construction.

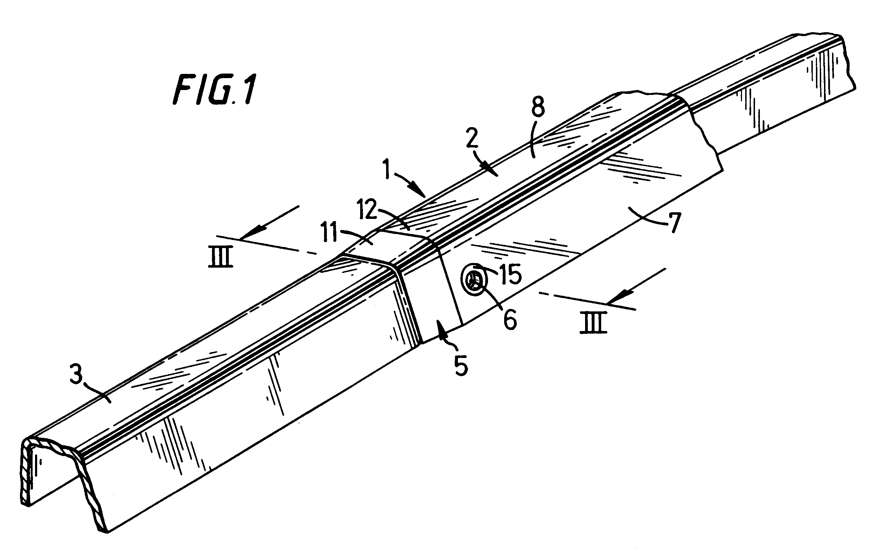

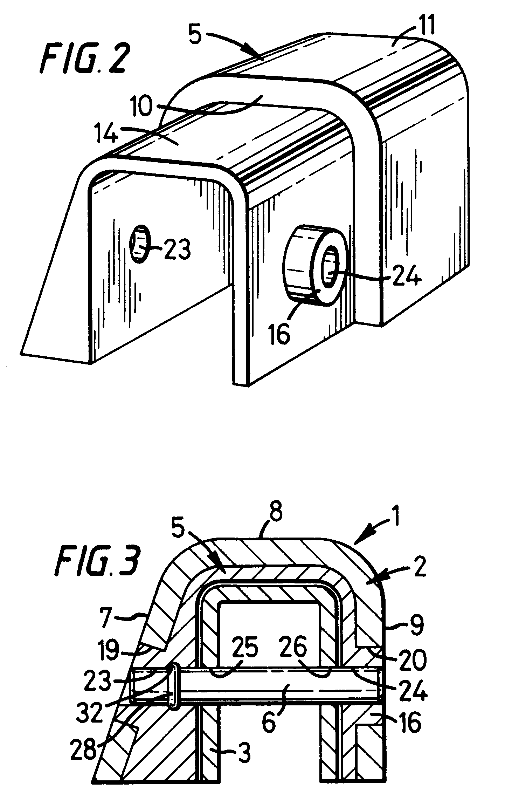

Referring to figure 1 of the drawings, there is shown a pivot joint 1 between one end of the primary yoke 2 of the harness of a windscreen wiper blade and the secondary yoke 3, the joint being completed by a joint body 5 lying mainly between the two yokes 2 and 3 and a pin 6 passing through both yokes 2 and 3 and the joint body 5. In the embodiment shown, it can be seen that the primary yoke is of generally channel section having one wall 7 which is inclined outwardly from the base 8 of the channel while the remaining wall 9 (figure 3) is at right angles to the channel base 8. The departure of the primary yoke 2 from the usual channel section is determined by the particular characteristics of the blade which form no part of the present invention per se. The secondary yoke 3 is of the usual channel section to one side of the joint but is of the same section as the primary yoke on the other side where it forms an extension of the shape of the main yoke 2. It will be seen that the dimensions of the secondary yoke 3 are such that, at the joint, it will sit within the channel of the primary yoke 2 with sufficient clearance to permit the interposition of the joint body 5.

The joint body 5 can be particularly seen from figures 2 and 3. It comprises a generally channel shaped plastics moulding and is shaped exteriorly to enable it to fit snugly inside the channel of the primary yoke 2. It has a shoulder 10 towards one end 11 against which the end 12 of the primary yoke sits and which provides a cover for the joint end, the outer contour of this end portion 11 being shaped to continue the exterior surface of the primary yoke 2 into, as nearly as possible, the exterior surface of the secondary yoke 3. The remaining portion 14 is of reduced dimensions in order to seat within the channel of the primary yoke 2 and exhibits a pair of trunnions 15 and 16 which, while they are generally aligned for a purpose to be described hereafter, are inclined to each other so that, when assembled to the primary yoke 2, they will extend at right angles to the respective side walls 7 and 9 thereof. In this position, they pass into apertures 19 and 20 in the primary yoke 2 and their ends are preferably flush with the exterior surface of the primary yoke 2.

A bore 23 or 24 is formed in each of the trunnions 15 and 16 respectively, the bore 24 in the right hand trunnion 16 being coaxial with the trunnion 16 and the bore 23 in the left hand trunnion 15 being inclined to the axis of the trunnion 15 so as to be aligned with the other bore 24. These bores 23 and 24 are additionally aligned with a pair of apertures 25 and 26 in the side walls of the secondary yoke 3 which, when assembled, lies within the channel of the joint body 5. The bore 23 in the left hand trunnion 15 is formed with an annular groove 32.

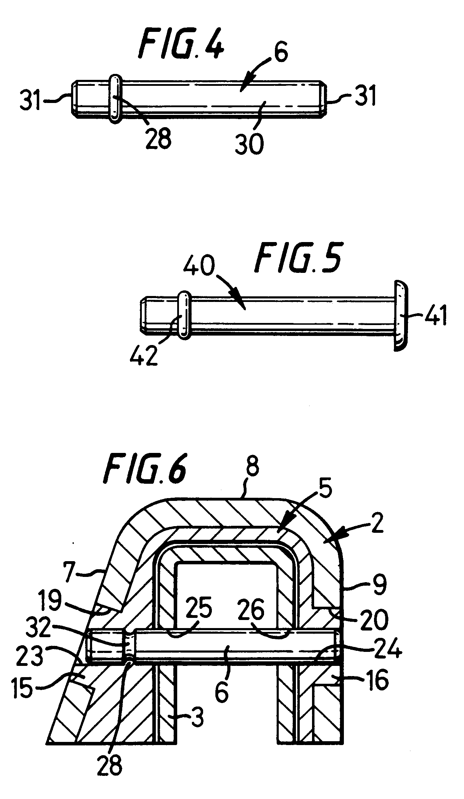

The joint is completed by the pin 6, shown in figure 4 which may be of metal or plastics material. It is basically in the form of a plain cylindrical rod 30 with rounded ends 31 which has, towards one end, an annular projection or rib 28 whose position is intended to coincide with the position of the groove 32 in the bore 23 of the joint body 5.

The assembly of the pivot joint described above will now be considered:-
The primary and secondary yokes 2 and 3 are formed with the appropriate apertures 19, 20, 25 and 26, the joint body 5 is moulded and the pin 6 is formed. The first step of the assembly is to push the joint body 5 into the channel of the primary yoke 2 using the enlarged part 11 as a guide. The joint body 5 is made of a sufficiently resilient plastics material that, as the joint body 5 is pushed into the channel of the primary yoke 2, the sides of the joint body 5 will be forced towards each other to allow the trunnions 15 and 16 to pass into the channel. Once the joint body 5 has been pushed home, the sides will spring back again, introducing the trunnions 15 and 16 into the respective apertures 19 and 20 in the primary yoke 2.

Then the secondary yoke 3 is offered up into the channel of the joint body 5, in which it is a sufficiently loose fit to enable pivotting between the secondary yoke 3 and the joint body 5. At this point, the apertures 25 and 26 in the secondary yoke 3 will be in alignment with the bores 23 and 24 in the trunnions 15 and 16 of the joint body 5 and the pin 6 can be pushed in. The pin 6 may need to be actually forced in to enable its rib 28 to pass through the bores 23 in the trunnions, but once the rib 28 in the pin 6 is in alignment with the groove 32, the groove 32 will snap around the rib 28, locking the pin 6 in place and thus maintaining the joint.

It is to be observed that, with the arrangement shown, the secondary yoke 3 can pivot relative to the joint body 5 which itself will remain stationary with the primary yoke 2.

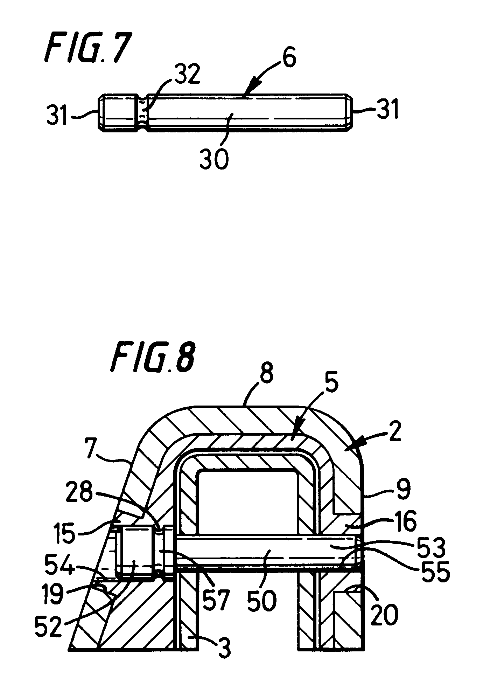

Figure 5 shows a variation of the pin which can be used with the above described joint. In this case, the pin 40 has a head 41 and an annular rib 42 towards the end away from the head 41. With this type of pin, the trunnion on the appropriate side may be cut back or countersunk to receive the head but this is not essential.

Figure 6 shows a variation of the pivot joint shown in figures 1 to 3. In this form, the position of the rib 28 and annular groove 32 are reversed so that the groove 32 is formed on the pin 6 and the rib 28 is formed on the wall of the bore 23 of the joint body 5. This makes for a slightly weaker construction of the joint due to a reduction in the diameter of the pin 6. The pin 6 can be seen best from figure 7.

Figure 8 shows a further variation of the pivot joint shown in figures 1 to 3. In this case, the pin 50 used is of stepped formation between its ends, so that one part 52 is of larger diameter than the other part 53. Correspondingly, the bores 54 and 55 in the trunnions 15 and 16 are of different diameters. This makes for easier threading through of the pin 50 and can make for easier alignment. The annular groove 57 can in fact be arranged in either part of the pin 50 with appropriate positioning of the rib 28 or vice versa.

It will be appreciated that various modifications may be made to the above described embodiments. For example, the trunnions could be of any other desired shape, such as oval or square since there is no need to enable any pivotting at this point. If desired, the shoulder 10 on the joint body could be omitted and aligned trunnions could be used, allowing the primary yoke to pivot relative to the joint body. Furthermore, in this latter case, the secondary yoke could then be maintained stationary with respect to the joint body by using a pin of non-circular cross section.

Where the rib is formed on the pin, this need not be continuous but could be formed as a number of radially extending lugs, for example two. These lugs could be produced by forming pairs of indentations in the pin in such a way that the material of the pin is forced out between the indentations.

It is to be understood that while the invention has been described as applicable to a primary yoke with one side wall inclined, both walls could be inclined or both walls could be at right angles to the base of the channel.

While the invention has been described with particular reference to the harness of a windscreen wiper blade, it is to be understood that the invention is not limited to the windscreen wiper field but may also be applied to any situation in which a similar pivot joint is required.

## Claims

1. A pivot joint (1) for pivoting together first and second members (2,3), at least the first member (2) of which is of channel section at the joint and the second member (3) of which is adapted to seat within the first member (2), comprising a joint body (5) of generally channel section adapted to sit within the first member (2) and to receive the second member (3) therewithin, the joint body (5) having a pair of outwardly extending trunnions (15, 16) adapted to cooperate with apertures (19, 20) in the first member (2), aligned bores (23,24,54,55) through the trunnions (15, 16) adapted to be aligned with aligned apertures (25, 26) in the second member (3), and a pin (6,50) adapted to extend through the apertures (19,20,25,26) of the members (2,3) and through the bores (23,24,4,55) of the trunnions (15,16) of the joint body (5), characterised in that the pin (6,50) is retained in one (23,54) of the bores (23,24,54,55) of the joint body (5) by means of one or more projections (28) or recesses (32) on the pin (6,50) cooperating with a respective recess or recesses (32) or a projection or projections (28) in the bore (23,54) of the joint body (5).

2. A pivot joint as claimed in claim 1, characterised in that a single projection (28) is provided in the form of an annular rib and the cooperating recess (32) is an annular groove.

3. A pivot joint as claimed in claim 1 or 2, characterised in that the pin (6) is formed with the projection or projections (28) and the bore (23) is provided with the groove or grooves (32).

4. A pivot joint as claimed in any one of claims 1 to 3, characterised in that the pin (50) is of stepped construction, being of larger diameter at one end (52) than the other (53).

5. A pivot joint as claimed in any one of claim 1 to 4, characterised in that the members (2, 3) are yokes of a windscreen wiper harness.

6. A pivot joint as claimed in claim 5, characterised in that the first member (2) is the primary yoke of a windscreen wiper blade harness and the second member (3) is the secondary yoke thereof.

## Revendications

1. Articulation à pivot (1) destiné à faire pivoter conjointement des premier et second éléments (2, 3), dont au moins le premier élément (2) est un profilé en U au niveau de l'articulation et dont le second élément (3) est apte à se loger à l'intérieur du premier élément (2), comprenant un corps d'articulation (5) de section généralement en U apte à reposer à l'intérieur du premier élément (2) et à y recevoir le second élément (3), le corps d'articulation (5) comportant une paire de tourillons s'étendant vers l'extérieur (15, 16) aptes à coopérer avec des ouvertures (19, 20) dans le premier élément (2), des alésages alignés (23, 24, 54, 55) à travers les tourillons (15, 16) aptes à être alignés sur les ouvertures alignées (25, 26) dans le second élément (3) et un axe (6, 50) apte à s'étendre à travers les ouvertures (19, 20, 25, 26) des éléments (2, 3) et à travers les alésages (23, 24, 54, 55) des tourillons (15, 16) du corps d'articulation (5), caractérisée en ce que l'axe (6, 50) est retenu dans l'un (23, 54) des alésages (23, 24, 54, 55) du corps d'articulation (5) au moyen d'une ou de plusieurs saillies (28) ou d'évidements (32) sur l'axe (6, 50) coopérant avec un évidement ou des évidements (32) respectifs ou une saillie ou des saillies (28) dans l'alésage (23, 54) du corps d'articulation (5).

2. Articulation à pivot selon la revendication 1, caractérisée en ce qu'une saillie unique (28) est prévue sous forme d'une nervure annulaire et l'évidement coopérant (32) est une gorge annulaire.

3. Articulation à pivot selon la revendication 1 ou la revendication 2, caractérisée en ce que l'axe (6) comporte une saillie ou des saillies (28) et l'alésage (23) est muni de la gorge ou des gorges (32).

4. Articulation à pivot selon l'une quelconque des revendications 1 à 3, caractérisée en ce que l'axe (50) est de conception à gradins, avec un plus grand diamètre sur une extrémité (52) que sur l'autre extrémité (53).

5. Articulation à pivot selon l'une quelconque des revendications 1 à 4, caractérisée en ce que les éléments (2, 3) sont des étriers ou bras d'un ensemble d'essuie-glace pour pare-brise.

6. Articulation à pivot selon la revendication 5, caractérisée en ce que le premier élément (2) constitue l'étrier ou bras primaire d'un ensemble de lame d'essuie-glace pour pare-brise et le second élément (3) est son étrier ou bras secondaire.

**Patentansprüche**

1. Schwenkverbindung (1) um ein erstes und ein zweites Teil (2, 3) miteinander zu verschwenken, wobei zumindest das erste Teil (2) an der Verbindung einen kanalförmigen Querschnitt aufweist und das zweite Teil (3) so angepaßt ist, daß es innerhalb des ersten Teils (2) sitzt, die einen Verbindungskörper (5) mit einem im allgemeinen kanalförmigen Querschnitt aufweist, der so angepaßt ist, daß er innerhalb des ersten Teils (2) sitzt und das zweite Teil (3) darin aufnimmt, wobei dieser Verbindungskörper (5) ein Paar sich nach außen erstreckender Drehzapfen (15, 16), die so angepaßt sind, daß sie mit den Öffnungen (19, 20) im ersten Teil (2) in Wechselwirkung stehen, axial ausgerichtete Bohrungen (23, 24, 54, 55) durch die Drehzapfen (15, 16), die so angepaßt sind, daß sie mit den axial ausgerichteten Öffnungen (25, 26) im zweiten Teil (3) axial ausgerichtet sind, und einen Stift (6, 50) umfaßt, der so angepaßt ist, daß er sich durch die Öffnungen (19, 20, 25, 26) der Teile (2, 3) und durch die Bohrungen (23, 24, 4, 55) der Drehzapfen (15, 16) des Verbindungskörpers (5) erstreckt, dadurch gekennzeichnet, daß der Stift (6, 50) in einer (23, 54) der Bohrungen (23, 24, 54, 55) des Verbindungskörpers (5) mittels eines oder mehrerer Vorsprünge (28) oder Vertiefungen (32) auf dem Stift (6, 50) gehalten wird, die mit einer oder mehreren entsprechenden Vertiefungen (32) oder einem oder mehreren Vorsprüngen (28) in den Bohrungen (23, 54) des Verbindungskörpers (5) in Wechselwirkung stehen.

2. Schwenkverbindung nach Anspruch 1, dadurch gekennzeichnet, daß ein einzelner Vorsprung (28) in Form einer ringförmigen Rippe vorgesehen ist, und die in Wechselwirkung stehende Vertiefung (32) eine ringförmige Nut ist.

3. Schwenkverbindung nach Anspruch 1 oder 2, dadurch gekennzeichnet, daß der Stift (6) mit dem Vorsprung oder den Vorsprüngen (28) versehen ist, und die Bohrung (23) mit der Nut oder den Nuten (32) ausgestattet ist.

4. Schwenkverbindung nach einem der Ansprüche 1 bis 3, dadurch gekennzeichnet, daß der Stift (50) einen stufenförmigen Aufbau aufweist, der an einem Ende (52) einen größeren Durchmesser als am anderen Ende (53) aufweist.

5. Schwenkverbindung nach einem der Ansprüche 1 bis 4, dadurch gekennzeichnet, daß die Teile (2, 3) Arme einer Scheibenwischerausrüstung sind.

6. Schwenkverbindung nach Anspruch 5, dadurch gekennzeichnet, daß das erste Teil (2) der primäre Arm der Ausrüstung eines Scheibenwischerblattes ist und das zweite Teil (3) dessen sekundärer Arm ist.

*FIG.1*

EP 0 281 397 B1

FIG.2

FIG.3

## FIG.4

## FIG.5

## FIG.6

FIG.7

FIG.8